# EUROPEAN PATENT APPLICATION

(11) **EP 2 988 273 A1**
(43) Date of publication of application: **24.02.2016**
(21) Application number: 14181987.0
(22) Date of filing: 22.08.2014
(51) Int. Cl.: G06T 7/20, G06K 9/00

(54) **Object detection device and method for detecting an object within a video sequence**

(71) Applicant: Siemens Aktiengesellschaft, 80333 München (DE)
(72) Inventor: Amon, Peter, 81675 München (DE); Hutter, Andreas, 81673 München (DE); Laumer, Marcus, 91085 Weisendorf (DE); Wojaczek, Philipp Maximilian, 53359 Wormersdorf (DE)

(57) **Abstract**

An object detection device (100) for detecting an object within a video sequence is provided. The object detection device (100) comprises a first stage (10) for predicting a presence of the object within the video sequence, wherein the video sequence is in the form of compressed video data (1), for providing presence information (3) indicating which part of the video sequence includes the object, and for providing a decoded part (2) of the video sequence including the object, and a second stage (20) for processing the decoded part (2) of the video sequence including the object and for determining a characteristic (4) of the object.

The first stage operates on the compressed video data and determines relevant parts of the video sequence for the object detection. Thus, only a part of the compressed video data needs to be decoded to be processed by the second stage. Therefore, the object detection requires reduced time and computing resources.

## Description

The present invention relates to an object detection device for detecting an object within a video sequence. The present invention further relates to a method for detecting an object within a video sequence. Furthermore, the present invention relates to a computer program product comprising a program code for executing such a method.

When using surveillance systems, images and videos may be processed and examined in order to detect specific objects. Due to the increasing amount of data, i.e. images and videos, from surveillance cameras of such systems the cost and complexity of processing and evaluating this data has grown largely. Typically, each frame of a video sequence has to be analyzed for detecting objects like people or vehicles and associated events. For example, when the video sequences are compressed according to the video standard H.264/AVC, the analysis may involve the steps of decoding the compressed bit stream, analyzing each frame for objects in the pixel domain and finally tracking the objects.

The analysis may be very costly, e.g. time and resource consuming, and attempts have been made to reduce the amount of analysis effort by leveraging information contained in the compressed bit stream. For example, in C. Poppe et al., Moving object detection in the H.264/AVC compressed domain for video surveillance applications, Journal of Visual Communication and Image Representation, vol. 20, no. 6, pages 428-437, Aug. 2009, an algorithm for surveillance applications is described, which is based on analyzing the number of bits of a macroblock, a specific element of the H.264/AVC defining a region of 16x16 pixels in an image. The first frames of a video sequence are analyzed and, for each macro block, the average number of bits over the frames is computed. During the search for moving objects in the following frames, each macroblock of a new frame is analyzed according to its number of bits. If the number of bits of a macroblock increases compared to its average number of bits, it is assumed that an object is moving in the image plane.

Laumer et al., Compressed domain moving object detection based on H.264/AVC macroblock types, VISAPP 2013 - Proceedings of International Conference on Computer Vision Theory and Applications, pages 219-228, Feb. 2013, describe an algorithm for analyzing the header information of the compressed bit stream. Based on the different types of macroblocks first a mask describing the probability of presence of moving objects in the image is computed. Then each element in the mask is compared to a threshold. Based on the result of comparing to a threshold, the element is either labeled as foreground or background. Foreground defines regions containing moving objects.

Further, there are multiple well-known algorithms that operate in the pixel domain. Typical classes of algorithms include, e.g., background subtraction, optical flow, appearance based detectors, and trackers. As indicated above, these inherently require the costly decompression of the coded video sequence.

It is one object of the present invention to detect objects, for example moving objects, within a video sequence requiring reduced computing resources.

Accordingly, an object detection device for detecting an object within a video sequence is provided. The object detection device comprises a first stage for predicting a presence of the object within the video sequence, wherein the video sequence is in the form of compressed video data, for providing presence information indicating which part of the video sequence includes the object, and for providing a decoded part of the video sequence including the object, and a second stage for processing the decoded part of the video sequence comprising the object and for determining a characteristic of the object.

The respective stage or unit, e.g. the first stage, may be implemented in hardware and/or in software. If said stage or unit is implemented in hardware, it may be embodied as a device, e.g. as a computer or as a processor or as a part of a system, e.g. a computer system. If said stage or unit is implemented in software it may be embodied as a computer program product, as a function, as a routine, as a program code or as an executable object.

As described above, in common systems, the object detection, recognition, and tracking is performed in the pixel domain which is very costly. If only a pixel-based search is used, every frame of a video sequence has to be decoded and analyzed, even if there are no persons or other objects in the cameras view. This may be very time and energy consuming.

The provided object detection device is based on the idea to use a combination of a compressed domain analysis and a pixel-based search. In the first stage, it is determined, based on the compressed video sequence, which part of the video sequence includes an object. The object may be any kind of object, like moving objects as for instance cars, persons or the like, but also specific non-moving objects, like stationary or immovable objects, for instance buildings, which is supposed to be detected. If there is no specific object, also called object to be detected, in the video sequence, the second stage does not perform any further action.

If there are one or more objects, the second stage receives a part of the video sequence in decoded form. This part includes the object. The second stage is adapted to process the decoded part of the video sequence, i.e. to process the video sequence in the pixel domain, and to determine a characteristic of the object. Thus, only relevant parts of the video sequence need to be decoded, which leads to reduced time and computing resources.

According to an embodiment, the second stage is adapted to process the decoded part of the video sequence in order to identify whether the object is a targeted object, wherein the characteristic of the object is a location of the targeted object.

The detected object may be any kind of moving object like persons, vehicles, animals or any kind of non-moving object like buildings. However, it can be desired to detect only specific objects, like persons. These desired objects are called targeted objects.

According to this embodiment, the second stage identifies whether the object predicted in the first stage is a targeted object or not. If not, the second stage does not perform any further action at this point. If the object is a targeted object, the second stage determines inter alia the location of the targeted object.

In this embodiment, it may be useful to configure the first stage in a way that objects are reliably detected, e.g., by setting a lower threshold for the decision between there is a moving object or not. Alternatively, the area of detected objects can be extended, e.g., by a fixed margin. This means that the part of the video sequence comprising the object can be increased.

According to a further embodiment, the second stage is adapted to perform a pixel-based search algorithm.

As pixel-based search algorithm, an Implicit Shape Model can be used. The Implicit Shape Model (ISM) is a method for detecting and localizing objects in real-world scenes (see for example B. Leibe et al., Robust Object Detection with Interleaved Categorization and Segmentation, International Journal of Computer Vision, vol. 77, no. 1-3, pages 259-289, May 2008). It searches for objects in the pixel domain. It consists of two phases, a learning phase and a detection phase. In the learning phase, the ISM is trained on objects it should detect and therefore creates a so-called codebook. In the detection phase, the ISM searches for objects similar in shape and appearance to the ones it is trained on.

According to a further embodiment, the second stage is adapted to process the decoded part of the video sequence in order to track the objects over a plurality of frames of the decoded part of the video sequence, wherein the characteristic of the object is a position over time and/or a trajectory.

According to this embodiment, the second stage tracks any kind of object being detected in the first stage. If the recognition of specific objects, e.g., persons, is not necessary but all objects should be tracked, the second stage performs a pixel-based tracking directly on areas of the video sequence indicated as comprising the objects by the first stage.

In this embodiment, the first stage may be configured to indicate only main parts of the video sequence comprising objects in order to improve the tracking performance of the second stage. This can be done by using higher thresholds for the decision between object or not.

According to a further embodiment, the second stage is adapted to perform a pixel-based tracking algorithm.

As pixel-based or pixel domain tracking algorithm, a mean shift algorithm may be used.

The mean shift algorithm (see for example Comaniciu, V. et al., Kernel-based object tracking, IEEE Transactions on Pattern Analysis and Machine Intelligence, vol. 25, no.5, pages 564-577, May 2003) may be used for image filtering, but can be adapted for object tracking. When used for image filtering, it localizes the modes in a multi-dimensional feature space, e.g., the RGB color space. To track an object, its probability density function has to be known. As probability density function, called model, a color histogram may be used. The search may be weighted with the objects color histogram to localize the objects position in the image plane.

According to a further embodiment, the second stage is adapted to process the decoded part of the video sequence in order to identify whether the object is a targeted object and wherein the second stage is adapted to process the decoded part of the video sequence in order to track the targeted object over a plurality of frames of the decoded part of the video sequence.

According to this embodiment, the second stage may identify the object as targeted object and may then track the targeted object. Thus, the second stage in this embodiment may be seen as a second stage (identifying targeted object) and a third stage (tracking the targeted object).

According to a further embodiment, the first stage is adapted to perform a compressed domain object detection algorithm.

According to this embodiment, the first stage may identify objects by the analysis of syntax elements of the compressed bit stream, e.g., block type, macroblock type, prediction unit type, motion information like motion vectors, coefficient values, etc. and/or by evaluating size information, e.g., the number of bits of a block, a macroblock, a coding unit, a slice, a tile, a frame, etc.

As compressed domain object detection algorithm, the algorithm as described in Laumer et al., Compressed domain moving object detection based on H.264/AVC macroblock types, VISAPP 2013 - Proceedings of International Conference on Computer Vision Theory and Applications, pages 219-228, Feb. 2013, may be used. Based on different types of macroblocks, first a mask describing the probability of presence of objects in the image is computed. Then each element in the mask is compared to a threshold. Based on the result of comparing to a threshold, the element is either labeled as foreground or background. Foreground in this context defines regions containing objects.

According to a further embodiment, the first stage includes a decoding unit for decoding the video sequence.

The decoding unit is adapted to decode the compressed video sequence, partially or the whole sequence. The decoding unit is adapted to use a decoding algorithm according to the encoding scheme of the video sequence.

According to a further embodiment, the decoding unit is adapted to decode only the part of the video sequence comprising the object.

If there is no object detected in the video sequence, the first stage classifies the whole image as background. That means there is no need for the second stage to search for objects. Thus, also the decoding unit does not decode the video sequence.

If there is an object, the first stage defines the image area as foreground, where the second stage will then search for objects. In that case, the decoding may be limited to a specific image area. The specific image area may be specific frames of the video sequence or specific parts of each frame.

Only images or image areas where the first stage locates objects are decoded in order to reduce the computational load. For instance for the case of decoding only image areas, the HEVC standard defines tiles, which can be independently decoded. In this case, only those tiles are decoded where objects have been detected. In H.264/AVC and HEVC, only those slices are decoded where objects were detected, i.e., where foreground was defined or segmented.

It should be noted that for selectively decoding of individual images or images areas, previous images might have to be decoded for inter-frame prediction, i.e., P frames and B frames.

According to a further embodiment, the first stage is adapted to generate a binary mask defining a foreground and a background of the video sequence, wherein the presence information indicates the foreground as being the part of the video sequence comprising the object and/or wherein the first stage is adapted to generate a multilevel map defining a probability of objects, wherein the presence information indicates a probability of an object at a specific location within the video sequence.

The first stage preprocesses the compressed video data, also called bit stream, and makes a prediction of the presence of moving objects in the sequence. Based on the prediction a binary mask defining foreground and background is produced. Foreground is the part of a frame, where the probability of the presence of an object is high. The second stage then searches for objects in those parts of a decoded frame that were defined as foreground.

A multilevel map defines several levels of the video sequence, wherein one level, being associated with the specific location, has a higher probability for including an object than the other level of the multilevel map.

According to a further embodiment, the second stage is adapted to generate a bounding box defining a position and a scale of the object.

If the second stage has found a targeted object, e.g., a person, a bounding box, defining the object's position and scale, may be handed over to the part of the second stage performing the tracking of the targeted object.

According to a further embodiment, the second stage is adapted to combine the binary mask and the bounding box and to process the decoded part of the video sequence in which the binary mask and the bounding box overlap.

When using a mean shift algorithm for the tracking of the targeted object, a color histogram of the object to track may be used. This color histogram may be computed for the area in the image plane defined by the bounding box resulting from the second stage, where the presence of the targeted object is assumed. As the bounding box resulting from the second stage is not always accurate enough and a rectangle is too coarse to describe a complex object geometry, a lot of background information may be contained in the color histogram. For that reason, it is possible that the mean shift algorithm loses the object and assumes its position at a wrong place. To prevent the tracking algorithm from moving to a wrong position, the binary mask resulting from the first stage may be used as an overlay for the current frame. As the mask defines foreground and background, the tracking algorithm can be forced to converge to a position in the defined foreground, which coincides mostly with the object's real position.

This concept can be generalized to other tracking algorithms that build a model of the object under observation possibly using a larger or a different set of features than a color histogram.

As mentioned above, too much background information in an object's color histogram may cause the tracking algorithm to move to wrong positions. The less background information in an object's histogram is the better is the tracking algorithm able to follow the object's movement in the image plane. To get an object's color histogram with as less background as possible, an algorithm to segment an object in the image plane may be used. First, the foreground, defined by the binary mask, of an image is searched for objects. If an object is found, the binary mask of the first stage and the object's bounding box are combined to detect an area, where both of them overlap.

A possible embodiment of such a combination is described in the following. A color histogram for the overlapping part of the image, defined as H, is computed based on the hue component of the color space HSV. The interior of the bounding box, which is both background and foreground and has to be segmented is defined as B. B is segmented into blocks of size NxN pixels. For every block a histogram in hue is computed. The histogram of every block is compared to the histogram computed for the background H. The comparison result can be expressed with a value from 0 to 1, called distance. The higher the value the less similar are both histograms. Then the average for all distances is computed. Each distance is compared to a threshold. The threshold is based on the just computed average value, e.g., the threshold is in the range from 1*average to 1.2*average. If the distance is above the threshold, the corresponding block belongs to foreground, otherwise to background. The result is a finer segmentation of B into foreground and background. An object histogram can be computed based on the segmented foreground.

According to a further embodiment, the object detection device further comprises a pre-analysis stage for determining relevant frames of the video sequence by performing a change detection algorithm, wherein the first stage is adapted to process the determined relevant frames for predicting the presence of an object.

The pre-analysis stage can use a change detection algorithm to detect major changes within contained video content in a compressed bit stream (see for example M. Laumer et al., A compressed domain change detection algorithm for RTP streams in video surveillance applications, Proceedings of 2011 IEEE 13th International Workshop on Multimedia Signal Processing, Hangzhou, China, Oct. 2011). This algorithm can be applied as a pre-analysis stage in order to detect frames with relevant events, i.e., significant content change, e.g., related to objects.

The pre-analysis stage may signal the ID of frames that contain relevant events. Only those frames are further processed by the first stage, which further reduces the computational complexity.

Any embodiment of the first aspect may be combined with any embodiment of the first aspect to obtain another embodiment of the first aspect.

According to a second aspect, a method for detecting an object within a video sequence is provided. The method comprises predicting a presence of the object within the video sequence, wherein the video sequence is in the form of compressed video data, providing presence information indicating which part of the video sequence includes the object, providing a decoded part of the video sequence including the object, processing the decoded part of the video sequence comprising the object, and determining a characteristic of the object.

According to a further aspect, the invention relates to a computer program product comprising a program code for executing the above-described method for detecting an object within a video sequence when run on at least one computer.

A computer program product, such as a computer program means, may be embodied as a memory card, USB stick, CD-ROM, DVD or as a file, which may be downloaded from a server in a network. For example, such a file may be provided by transferring the file comprising the computer program product from a wireless communication network.

The embodiments and features described with reference to the system of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a schematic block diagram of a first embodiment of an object detection device;
Fig. 2 shows a schematic block diagram of a second embodiment of an object detection device;
Fig. 3 shows a schematic block diagram of a third embodiment of an object detection device; and
Fig. 4 shows an embodiment of a sequence of method steps for detecting an object within a video sequence.

In the Figures, like reference numerals designate like or functionally equivalent elements, unless otherwise indicated.

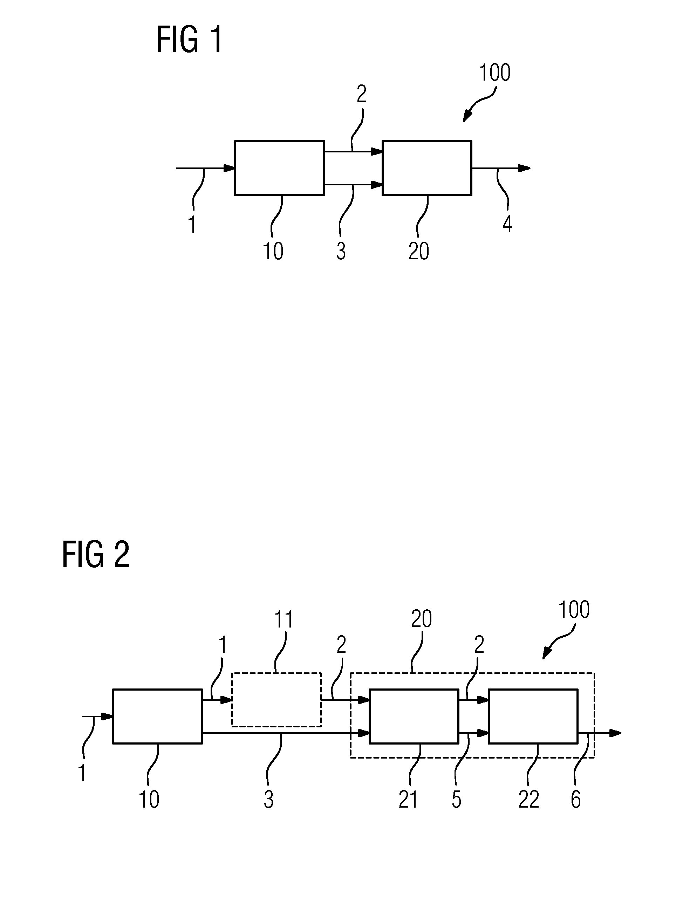

Fig. 1 illustrates an object detection device 100 for detecting an object within a video sequence.

For instance when using surveillance cameras, it might be desired to detect specific objects within a video sequence. The detection may comprise the identification of the objects (i.e., the recognition) as well as the tracking of the objects, which will be described in the following.

The object detection device 100 comprises a first stage 10 for predicting a presence of the object within the video sequence. The video sequence is output by a camera in the form of compressed video data 1. The first stage 10 can directly operate on the compressed video data 1.

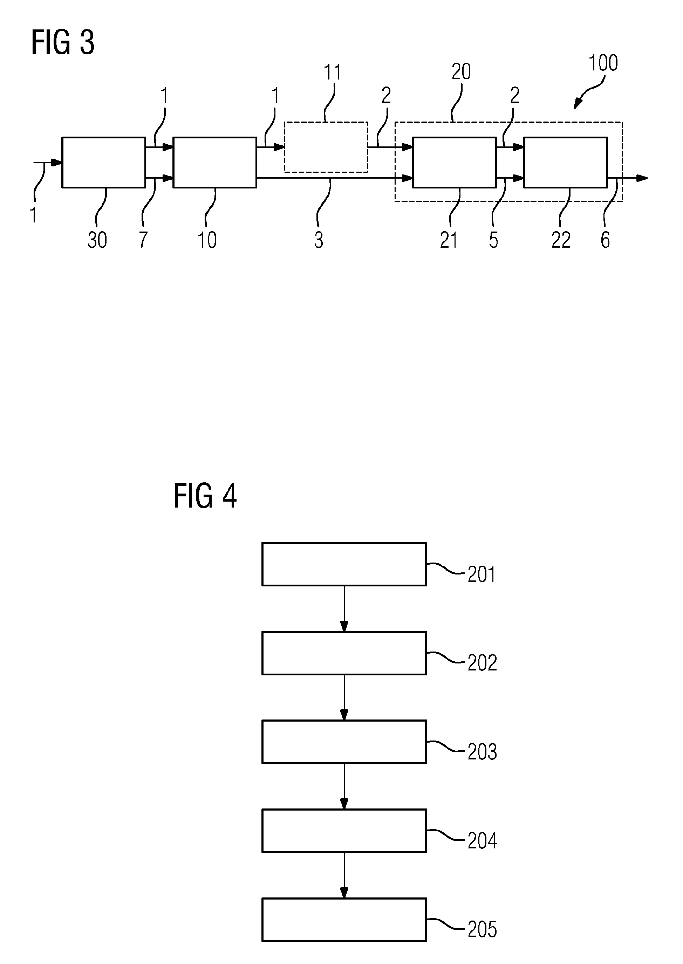

The first stage 10 is adapted to determine parts of the video sequence, or the compressed video data 1, which includes an object. This can also be called object detection. The first stage 10 outputs presence information 3 indicating which part of the video sequence includes the object. Further, the first stage 10 provides a part 2 of the video sequence in decoded form to a second stage 20. As can be seen in Figs. 2 and 3, the decoding may be done in a decoding unit 11, which may be part of the first stage 10.

The second stage 20 is adapted to process the decoded part 2 of the video sequence comprising the object and to determine a characteristic 4 of the object. The characteristic 4 of the object may be for example the kind or a location of the object.

In a first embodiment, the second stage 20 performs recognition of the object. If the tracking of objects is not necessary and it is sufficient to detect specific, i.e., targeted objects, the second stage 20 performs only an identification of the object and the characteristic 4 is the location of targeted objects.

In a second embodiment, the second stage 20 performs a tracking of an object. If the recognition of specific objects, e.g., persons or vehicles, is not necessary but all objects should be tracked, the second stage 20 only tracks the position of the objects over several frames of the decoded part 2 of the video sequence.

The first and second embodiment may also be combined as shown in Fig. 2. The second stage 20 then includes a first portion 21, the so-called pixel-domain object recognition unit, and a second portion 22, the so-called pixel-domain object tracking unit.

The pixel-domain object recognition unit 21 is responsible for the first embodiment, i.e. the identification of the object as targeted object. The pixel-domain object recognition unit 21 outputs a location 5 of the targeted object to the pixel-domain object tracking unit 22.

The pixel-domain object tracking unit 22 is responsible for the second embodiment, i.e. the tracing and re-identification of targeted objects in several frames over time. The pixel-domain object tracking unit 22 outputs object information like position or scale of the targeted object.

The object detection device 100 may comprise a pre-analysis unit 30 as shown in Fig. 3. The pre-analysis unit 30 can use a change detection algorithm to detect major changes within the compressed video sequence 1. The pre-analysis unit 30 detects frames with relevant events, i.e., significant content change, which are related to objects, and forwards the ID 7 of frames that contain relevant events to the first stage 10. The first stage 10 only processes those frames which further reduces the computational complexity.

Fig. 4 illustrates a method for detecting an object within a video sequence.

In a first step 201, a presence of the object within the video sequence is predicted. This is done when the video sequence is in the form of compressed video data 1.

In a second step 202, presence information 3 is provided. The presence information 3 indicates which part of the video sequence includes the object.

In a third step 203, a decoded part 2 of the video sequence including the object is provided.

In a fourth step 204, the decoded part 2 of the video sequence including the object is processed.

In a fifth step 205, a characteristic 4 of the object is determined.

Although the present invention has been described in accordance with preferred embodiments, it is obvious for the person skilled in the art that modifications are possible in all embodiments.

## Claims

1. An object detection device (100) for detecting an object within a video sequence, the object detection device (100) comprising:
a first stage (10) for predicting a presence of the object within the video sequence, wherein the video sequence is in the form of compressed video data (1), for providing presence information (3) indicating which part of the video sequence includes the object, and for providing a decoded part (2) of the video sequence including the object, and
a second stage (20) for processing the decoded part (2) of the video sequence including the object and for determining a characteristic (4) of the object.

2. The object detection device (100) according to claim 1, wherein the second stage (20) is adapted to process the decoded part (2) of the video sequence in order to identify whether the object is a targeted object, wherein the characteristic (4) of the object is a location of the targeted object.

3. The object detection device (100) according to claim 2, wherein the second stage (20) is adapted to perform a pixel-based search algorithm.

4. The object detection device (100) according to claim 1, wherein the second stage (20) is adapted to process the decoded part (2) of the video sequence in order to track the object over a plurality of frames of the decoded part (2) of the video sequence, wherein the characteristic (4) of the object is a position over time and/or a trajectory.

5. The object detection device (100) according to claim 4, wherein the second stage (20) is adapted to perform a pixel-based tracking algorithm.

6. The object detection device (100) according to one of claims 1 - 5,
wherein the second stage (20) is adapted to process (21) the decoded part (2) of the video sequence in order to identify whether the object is a targeted object and wherein the second stage (20) is adapted to process (22) the decoded part (2) of the video sequence in order to track the targeted object over a plurality of frames of the decoded part (2) of the video sequence.

7. The object detection device (100) according to one of claims 1 - 6,
wherein the first stage (10) is adapted to perform a compressed domain object detection algorithm.

8. The object detection device (100) according to one of claims 1 - 7,
wherein the first stage (10) includes a decoding unit (11) for decoding the video sequence.

9. The object detection device (100) according to claim 8, wherein the decoding unit (11) is adapted to decode only the part of the video sequence including the object.

10. The object detection device (100) according to one of claims 1 - 9,
wherein the first stage (10) is adapted to generate a binary mask defining a foreground and a background of the video sequence, wherein the presence information (3) indicates the foreground as being the part of the video sequence including the object and/or
wherein the first stage (10) is adapted to generate a multilevel map defining a probability of objects, wherein the presence information (3) indicates a probability of an object at a specific location within the video sequence.

11. The object detection device (100) according to one of claims 1 - 10,
wherein the second stage is adapted to generate a bounding box defining a position and a scale of the object.

12. The object detection device (100) according to claim 10 and 11,
wherein the second stage (20) is adapted to combine the binary mask and the bounding box and to process the decoded part (2) of the video sequence in which the binary mask and the bounding box overlap.

13. The object detection device (100) according to one of claims 1 - 12,
further comprising a pre-analysis stage (30) for determining relevant frames of the video sequence by performing a change detection algorithm,
wherein the first stage (10) is adapted to process the determined relevant frames for predicting the presence of an object.

14. A method for detecting an object within a video sequence, the method comprising:
predicting (201) a presence of the object within the video sequence, wherein the video sequence is in the form of compressed video data (1),
providing (202) presence information (3) indicating which part of the video sequence includes the object,
providing (203) a decoded part (2) of the video sequence including the object,
processing (204) the decoded part (2) of the video sequence including the moving object, and
determining (205) a characteristic (4) of the object.

15. A computer program product comprising a program code for executing the method of claim 14 for detecting an object within a video sequence.
